(19) Europäisches Patentamt
European Patent Office
Office européen des brevets

(11) Veröffentlichungsnummer : **0 411 313 B1**

(12) # EUROPÄISCHE PATENTSCHRIFT

(45) Veröffentlichungstag der Patentschrift : **29.12.93 Patentblatt 93/52**

(51) Int. Cl.$^5$ : **C07F 7/10,** C07F 7/18

(21) Anmeldenummer : **90112179.8**

(22) Anmeldetag : **27.06.90**

(54) **N,N'-Disubstituierte und N,N,N'-/N,N',N'-trisubstituierte Thioharnstoffe und Verfahren zur Herstellung (II).**

(30) Priorität : **31.07.89 DE 3925356**

(43) Veröffentlichungstag der Anmeldung : **06.02.91 Patentblatt 91/06**

(45) Bekanntmachung des Hinweises auf die Patenterteilung : **29.12.93 Patentblatt 93/52**

(84) Benannte Vertragsstaaten : **AT BE CH DE DK ES FR GB IT LI LU NL**

(56) Entgegenhaltungen :
**EP-A- 0 348 620**
**WORLD PATENT INDEX (online), DERWENT AN 79-76 607B; & SU-A-643 507**
**WORLD PATENT INDEX (online), DERWENT AN 87-354 148; & SU-A-1 308 379**

(73) Patentinhaber : **DEGUSSA AKTIENGESELLSCHAFT**
**Weissfrauenstrasse 9**
**D-60311 Frankfurt (DE)**

(72) Erfinder : **Deschler, Ulrich, Dr.**
**De Zwaan 17**
**B-2130 Brasschaat (BE)**
Erfinder : **Panster, Peter, Dr.**
**Im Lochseif 8**
**D-6458 Rodenbach (DE)**
Erfinder : **Kleinschmit, Peter, Dr.**
**Wildaustrasse 19**
**D-6450 Hanau 9 (DE)**

**EP 0 411 313 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft N,N'-disubstituierte und N,N,N'-/N,N'-N'-trisubstituierte Thioharnstoffe mit zusätzlich mindestens einer hydrolysierbaren Silylgruppe und mindestens einer tertiären Aminfunktion und ein Verfahren zur Herstellung dieser Verbindungen.

Von A. Baigozhin, Zh. Obshch. Khim. 43 (1973), 1408 (C.A. 79:66463r) ist die Umsetzung von Aminopropyltrialkoxysilanen mit Alkylisothiocyanaten bekannt, die zu N,N'-disubstituierten Thioharnstoffen der Formel führt, mit

$$(RO)_3Si\text{-}(CH_2)_3\text{-}NH\text{-}CS\text{-}NH\text{-}R'$$

R = Ethyl und R' = Phenyl, Allyl.

Diese Verbindungen werden zur Modifizierung von siliciumhaltigen Polymeren und Beschichtungen eingesetzt.

Eine symmetrische N,N'-substituierte Verbindung wird von M.G. Voronkov et al. beschrieben in Zh. Obshch. Khim. 54 (1984), 1098 (C.A. 101: 192031j). Man erhält sie durch Reaktion von Aminopropyltrialkoxysilanen mit Thioharnstoff ($(RO)_3Si\text{-}(CH_2)_3\text{-}NH\text{-}CS\text{-}NH\text{-}(CH_2)_3\text{-}Si(OR)_3$).

In der DE-OS 3821 465 werden zwei- oder mehrfach substituierte organyloxysilylfunktionelle Thioharnstoffe beschrieben.

Keine der in den drei genannten Veröffentlichungen aufgeführten Verbindungen verfügt neben der hydrolysierbaren Silylgruppe und der Thioharnstoff-Funktion über eine weitere reaktionsfähige Gruppe wie etwa einen Aminrest.

Aufgabe der Erfindung sind neue N,N'-disubstituierte und N,N,N'-/N,N',N'-trisubstituierte organyloxysilylfunktionelle Thioharnstoffe, die zusätzlich eine tertiäre Aminfunktion aufweisen, und ein Verfahren zur Herstellung dieser Verbindungen.

Gegenstand der Erfindung sind N,N'-disubstituierte oder N,N,N'-/N,N',N'-trisubstituierte Thioharnstoffe der allgemeinen Formel

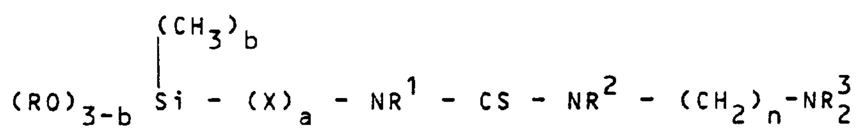

(I)

in der bedeuten:

b: 0; 1 oder 2

R: Alkyl mit 1 bis 6 C-Atomen,

Cycloalkyl mit 5 bis 7 C-Atomen, Aryl, Aralkyl

X: $-CH_2-$, wenn a = 1, 3, 4, 5 oder 6,

oder

X:

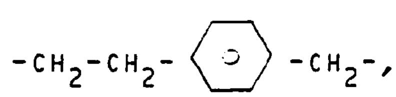

wenn a = 1,

$R^1$, $R^2$: beide gleich Wasserstoff,

oder

$R^1$: Wasserstoff und

$R^2$:

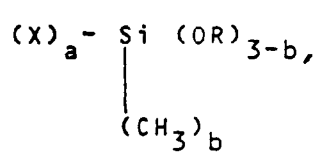

oder

$R^1$:

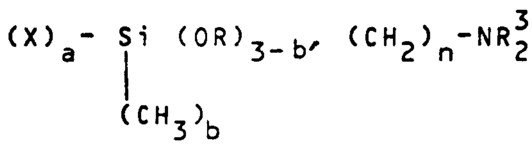

und

$R^2$: Wasserstoff,

$R^3$: Alkyl mit 1 bis 3 C-Atomen

n: 1 bis 6

Bevorzugt sind Verbindungen, bei denen bedeuten

R: Alkyl mit 1 bis 3 C-Atomen,

X: $-CH_2-$

a= 3

b= 0

$R^3$: Methyl oder Ethyl

n: 2 oder 3

Beansprucht wird ebenso ein Verfahren zur Herstellung von N,N'-disubstituierten und N,N,N'-/N,N',N'-trisubstituierten organyloxysilyl- und tertiär aminfunktionellen Thioharnstoffen gemäß Formel (I), das dadurch gekennzeichnet ist, daß man

a) Aminoorganylsilane der allgemeinen Formel

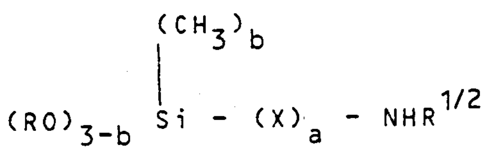 (II)

in denen a, b, X, R, $R^1$ und $R^2$ die obengenannten Bedeutungen haben, in einem organischen, inerten Lösungsmittel mit Kohlenstoffdisulfid gegebenenfalls unter Kühlung umsetzt, wobei die Umsetzung bei Verwendung von Verbindungen gemäß Formel (II) in Gegenwart eines tertiären Amins (A) oder Alkalialkoholats (MOR) erfolgt,

b) die dabei gebildeten Dithiocarbamate der allgemeinen Formel

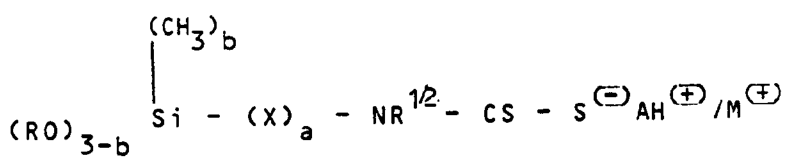 (III)

isoliert und mit mindestens der äquimolaren Menge einer Aminoverbindung der allgemeinen Formel

$$H_2N - (CH_2)_n - NR^3_2 \qquad (IV)$$

versetzt, in denen R, $R^1$, $R^2$, $R^3$, a, b, X und n die obengenannten Bedeutungen besitzen, dieses Gemisch erhitzt, bis die Reaktion abgeschlossen ist, und das entstandene Produkt gemäß Anspruch 1 anschließend mit an sich bekannten Methoden isoliert. Bevorzugt sind Verbindungen, in den $-(X)_a-$ für $-(CH_2)_3-$ steht.

Die Herstellung der gewünschten Verbindungen erfolgt nach den im folgenden beispielhaft wiedergegebenen Verfahrensschemata:

$$(C_2H_5O)_3Si-(CH_2)_3-NH_2 + CS_2 + N(C_2H_5)_3$$

THF/Pentan

$$(C_2H_5O)_3Si-(CH_2)_3-NH-CS-\overline{\underline{S}}|^{-}\ HN(C_2H_5)_3^{+}$$ 1

$+ H_2N-(CH_2)_n-NR_2$

$- N(C_2H_5)_3/H_2S$

$$(C_2H_5O)_3Si-(CH_2)_3-NH-CS-NH-(CH_2)_n-NR_2$$ 2

Schema 1: Herstellung N,N'-disubstituierter Thioharnstoffe mit einer hydrolysierbaren Silylgruppe und einer tertiären Aminfunktion.

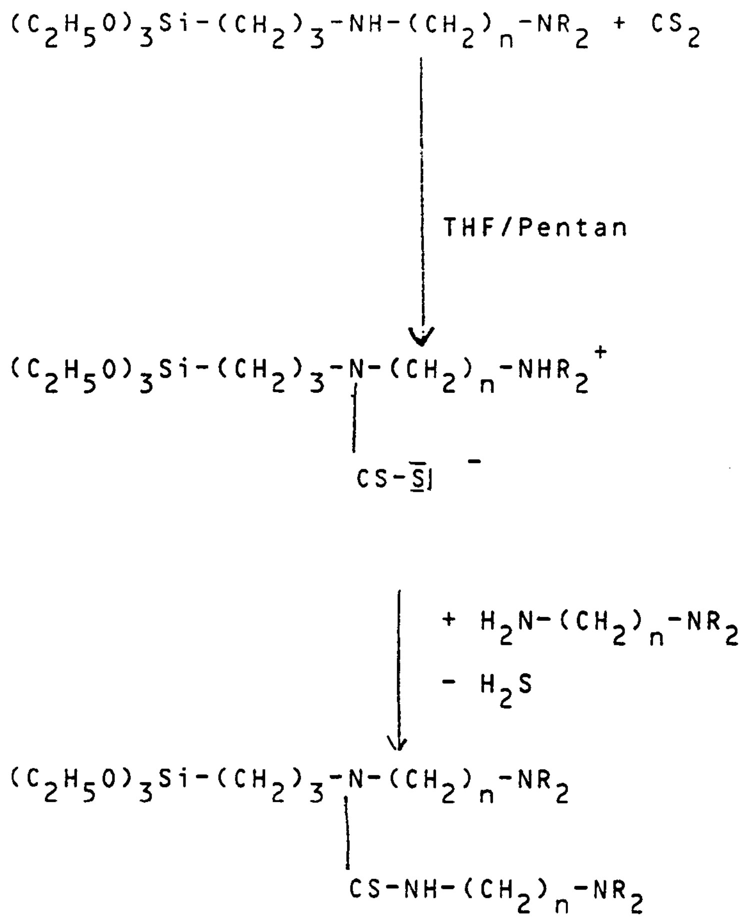


3

4

5

Schema 2: Herstellung N,N,N'-trisubstituierter Thioharnstoffe mit einer hydrolysierbaren Silylgruppe und zwei tertiären Aminfunktionen.

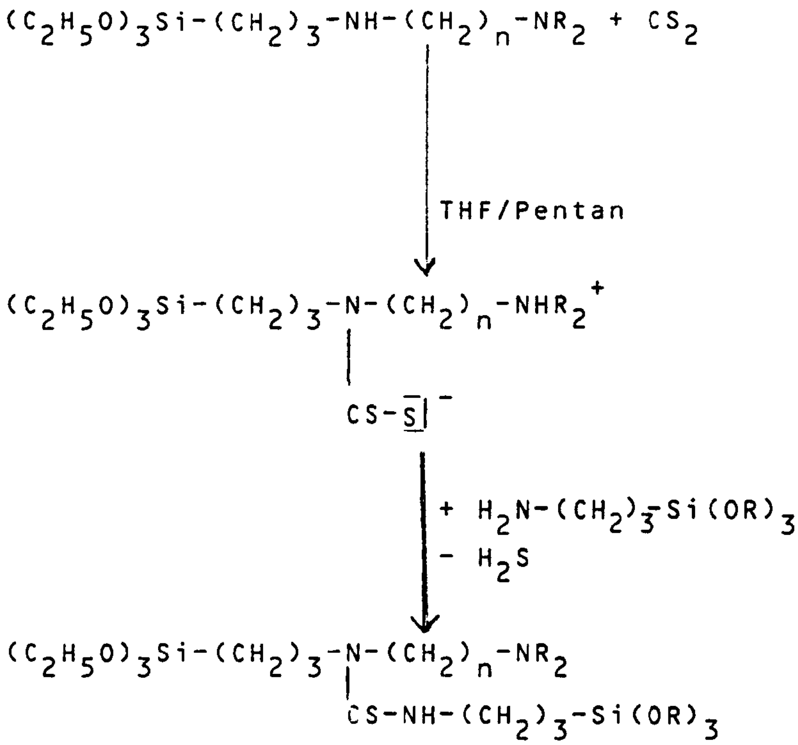


3

4

6

Schema 3: Herstellung N,N',N'-trisubstituierter Thioharnstoffe mit zwei hydrolysierbaren Silylgruppen und einer tertiären Aminfunktion

$$[(C_2H_5O)_3Si-(CH_2)_3]_2NH + CS_2$$

$+ NaOC_2H_5$

$- C_2H_5OH$

$$[(C_2H_5O)_3Si-(CH_2)_3]_2N-CS-\underline{S}|^- \quad Na^+$$ 7

$+ H_2N-(CH_2)_n-NR_2$

$-$ NaSH

$$[(C_2H_5O)_3Si-(CH_2)_3]_2N-CS-NH-(CH_2)_n-NR_2$$ 8

Schema 4: Herstellung N,N,N'-trisubstituierter Thioharstoffe mit zwei hydrolysierbaren Silylgruppen und einer tertiären Aminfunktion

Die Amin-funktionellen Ausgangsverbindungen 3 sind gemäß J.L. Speier et al., J.Org. Chem. 36 (1971) 3120 ff, z. B. aus Chloralkylsilanen und Diaminen herstellbar.

Die Reaktionsschritte zur Herstellung der Dithiocarbamate 1, 4 und 7 führt man vorzugsweise in einem unpolaren, aprotischen Lösungsmittel durch, wenn man tert. Amine als Protonenakzeptor einsetzt. Als Lösungsmittel besonders geeignet sind dann (halogenierte) Kohlenwasserstoffe oder (cyclische) Ether wie etwa n-Pentan oder Tetrahydrofuran sowie deren Mischungen.

Setzt man ein Alkalialkoholat als Protonenakzeptor ein, so sind darüber hinaus auch polare, aprotische Lösungsmittel, wie z. B. Dimethylformamid, aber auch bestimmte polare, protische Lösungsmitte, wie z. B. Alkohole geeignet. In letzterem Falle ist es besonders vorteilhaft, das Alkalialkoholat direkt durch die Reaktion von Alkalimetall, insbesondere Natrium oder Kalium mit einem Alkohol, insbesondere Methanol oder Ethanol, nach an sich bekannten Verfahren herzustellen und diese Reaktionslösung direkt für die Umsetzung zum Dithiocarbamat zu verwenden.

Als wesentliche Voraussetzung für die Eignung als Lösungsmittel gilt, daß es das als Ausgangsverbindung dienende Aminosilan einserseits lösen muß, während andererseits das gebildete Dithiocarbamat möglichst quantitativ ausgefällt werden soll, und daß es sich ansonsten als inert erweist. Die Reaktanden Aminoorganylsilan, Kohlenstoffdisulfid und der benötigte Protonenakzeptor (tertiäres Amin bzw. Alkalialkoholat) werden in einem Molverhältnis von etwa 1 : 1 eingesetzt, ohne daß damit beispielsweise eine bis zu 10 %ige Abweichung von den stöchiometrisch geforderten Mengen ausgeschlossen wäre.

Die bei Vermischen der Reaktanden sofort einsetzenden Reaktionen unter Bildung der Dithiocarbamate 1, 4 oder 7 werden vorzugsweise bei Temperaturen unterhalb des Siedepunktes des Kohlenstoffdisulfids, insbesondere bei Temperaturen von 0 bis 46 °C durchgeführt. Vorteilhafterweise gibt man die siliciumorganische Verbindung dem u. U. im stöchiometrischen Überschuß vorgelegten Kohlendisulfid zu. Das ausfallende "Dithiocarbamat" wird abfiltriert und unter Vakuum von den Lösungsmittelresten befreit.

Dithiocarbamate, wie man sie über die Reaktionen gemäß Schemata 1 bis 4 als Zwischenprodukte erhält,

sind teilweise aus der Literatur bekannt. Nach dem Stand der Technik werden sie jdoch mit Acrylnitril umgesetzt (DE-OS 2 000 224) oder durch Hydrolyse in Polysiloxanverbindungen umgewandelt (US-PS 2,938,046).

Erfindungsgemäß werden die als hellgelbe Kristallpulver anfallenden "Dithiocarbamate" zu Thioharnstoffen umgesetzt. Gemäß Schemata 1 bis 4 werden dazu primäre Amine bevorzugt in äquimolaren Mischungen mit den Organosiliciumverbindungen im allgemeinen ohne Lösungsmittelzusatz unter Rühren auf Temperaturen von 80 bis 140 °C erhitzt unter Bildung der Thioharnstoffe 2, 5, 6 oder 8.

In einer vorteilhaften Ausführungsform (vgl. DE-OS 3821465) zieht man den sich als Nebenprodukt bildenden Schwefelwasserstoff und das sich bei Verwendung von Ammonium-Dithiocarbamaten abspaltende tertiäre Amin unter Vakuum ab. Die dabei in hohen Ausbeuten in Form viskoser, gefärbter Flüssigkeiten anfallenden Thioharnstoffe brauchen nicht weiter gereinigt zu werden.

Setzt man bei dieser Umsetzung ein Alkali-Dithiocarbamat ein, so entsteht kein Schwefelwasserstoff, sondern es bildet sich das entsprechende Alkalihydrogensulfid. Dieses wird von dem gewünschten Produkt durch Ausfällung mit einem geeigneten Lösungsmittel, z. B. Aceton, nach gängigen Aufarbeitungsmethoden abgetrennt.

Die erfindungsgemäßen Verbindungen werden nach In-sich-Heterogenisierung zur Metallionenentfernung (insbesondere Cu(II)) aus wäßrigen und nichtwäßrigen Medien eingesetzt, die über die chelaktomplexierend wirkenden Amin- und Thioharnstoffgruppen erfolgt.

Die genaue Beschreibung ist den parallelen Anmeldungen P 39 25 357.0, 39 36 358.9, 39 25 359.7 und P 39 25 360.0 zu entnehmen.

Allgemeine Herstellvorschrift für Thioharnstoffe 2

Äquimolare Mengen des Ammoniumdithiocarbamts 1 (Herstellung vgl. DE-OS 3821465, Beispiel 2) und eines N,N-Dialkylalkylendiamins werden in einem Glaskolben mit Destillationsaufsatz unter Rühren bei Normaldruck für 2 h auf 120 °C erwärmt, wobei das freiwerdende Triethylamin abdestilliert wird. Zur Entfernung letzter Amin- und Schwefelwasserstoffreste wird das erhaltene flüssige Reaktionsprodukt noch für 30 min. bei einer Temperatur von 100 °C einem Vakuum von 1 mbar unterworfen.

Beispiel 1:

[N-2-(Dimethylamino)ethyl-N'-3-(triethoxysilyl) propyl]thioharnstoff

Herstellung aus 199,3 g 1 (0,5 Mol) und 44,1 g N,N-Dimethylethylendiamin (0,5 Mol);
Ausbeute: 169,7 entspr. 96,5 % d. Th.;
gelbbraune, viskose Flüssigkeit;

$C_{14}H_{33}N_3O_3SSi$ (351,586)

| | C [%] | H [%] | N [%] | S [%] |
|---|---|---|---|---|
| ber.: | 47,83 | 9,46 | 11,95 | 9,12 |
| gef.: | 46,8 | 9,6 | 12,3 | 9,8 |

Das 1H-NMR-Spektrum (250 MHz) dieses Thioharnstoffes wird in Abbildung 1 wiedergegeben.

Beispiel 2:

[N-2-(Diethylamino)ethyl-N'-3-(triethoxysilyl) propyl]thioharnstoff

Herstellung aus 199,3 g 1 (0,5 Mol) und 58,1 g N,N-Diethylethylendiamin (0,5 Mol);
Ausbeute:186 g entspr. 98,0 % d. Thn.;
orangegelbe, viskose Flüssigkeit;

$C_{16}H_{37}N_3O_3SSi$ (379,640)

| | C [%] | H [%] | N [%] | S [%] |
|---|---|---|---|---|
| ber.: | 50,62 | 9,82 | 11.07 | 8,45 |
| gef.: | 49,9 | 10,5 | 11,2 | 8,1 |

Beispiel 3:

[N-3-(Dimethylamino)propyl-N'-3-(triethoxysilyl) propyl ] thioharnstoff

Herstellung aus 210,2 g 1 (0,53 Mol) und 53,9 g N,N-Dimethyltrimethylendiamin (0,53 Mol);
Ausbeute: 183 g entspr. 95,5 % d. Th.;
gelbbraune, viskose Flüssigkeit.

$C_{15}H_{35}N_3O_3SSi$ (365,613)

| | C [%] | H [%] | N [%] | S [%] |
|---|---|---|---|---|
| ber.: | 49,28 | 9,65 | 11,49 | 8,77 |
| gef.: | 48,1 | 10,0 | 11,4 | 9,2 |

Allgemeine Herstellvorschrift für Dithiocarbamate 4

Pro Mol einzusetzendes Silan 3 (Herstellung vgl. J.Org.Chem. 36 (1971), 3120) werden 1,1 Mol Kohlenstoffdisulfid in THF als Lösungsmittel (350 ml pro Mol $CS_2$) vorgelegt. Dazu wird unter externer Kühlung mit Eis das Silan 3 in einer solchen Rate zudosiert, daß die Temperatur des Reaktionsgemisches unterhalb von 25 °C bleibt. Schon während der Silanzugabe fallen die jeweiligen inneren Dithiocarbamate 4 in Gestalt gelblicher Feststoffe aus. Zur Vervollständigung der Ausfällung wird nach Beendigung der Zugabe an 3 mit Petrolether versetzt (ca. 1,5 l pro Mol 3). Der ausgefallene Niederschlag wird durch Filtration und Trocknen im Vakuum vom Lösungsmittel befreit und braucht für weitere Umsetzungen nicht weiter gereinigt zu werden.

Beispiel 4:

[N-2-(Dimethylammonio)ethyl-N-3-(triethoxysilyl) propyl] dithiocarbamat

Herstellung aus 35,8 g $CS_2$ (0,47 Mol, Überschuß) und 125,0 g[N,N-Dimethyl-N'-(triethoxysilyl)propyl] ethylendiamin (0,43 Mol);
Ausbeute: 150,9 g entspr. 95,8 % d. Th.;
hellgelbes Pulver:

Beispiel 5:

[N-2-(Diethylammonio)ethyl-N-3-(triethoxysilyl)propyl] dithiocarbamat

Herstellung aus 41,9 g $CS_2$ (0,55 Mol, Überschuß) und 160,3 g[N,N-Diethyl-N'-3-(triethoxysilyl)propyl] ethylendiamin (0,5 Mol);
Ausbeute 179,4 g entspr. 90,4 % d. TH;
hellgelbes Pulver;

Beispiel 6:

[N-3-(Dimethylammonio)propyl-N-3-(triethoxysilyl) propyl] dithiocarbamat

Herstellung aus 41,9 g $CS_2$ (0,55 Mol, Überschuß) und 153,3 g [N,N-Dimethyl-N'-3-(triethoxysilyl)propyl] trimethylendiamin (0,5 Mol);
Ausbeute: 159,3 g entspr. 83,2 % d. Th.;
hellgelbes Kristallpulver;

Allgemeine Herstellvorschrift für Silylalkylthioharnstoffe 5:

Äquimolare Mengen an N,N-Dialkylalkylendiamin und innerem Dithiocarbamat 4 werden gemischt und für 2,5 h auf 120 °C erwärmt, wobei unter ständiger Schwefelwasserstoffentwicklung die gewünschten Produkte gebildet werden. Restmengen an physikalisch gelöstem $H_2S$ werden anschließend durch Vakuumbehandlung entfernt.

Beispiel 7:

[N-2-(Diethylamino)ethyl-N'-2-(diethylamino)ethyl-N'-3-(triethoxysilyl)propyl] thioharnstoff

Herstellung aus 52,2 g N,N-Diethylethylendiamin (0,45 Mol) und 178 g [N-2-(Diethylammonio)ethyl-N-3-(triethoxysilyl)propyl] dithiocarbamat aus Beispiel 5 (0,45 Mol)
Ausbeute: 208,9 g entspr. 97,0 % d. Th.;
orangefarbene, viskose Flüssigkeit;

$C_{22}H_{50}N_4O_3SSi$ (478,817)

| | C [%] | H [%] | N [%] | S [%] |
|---|---|---|---|---|
| ber.: | 55,19 | 10,53 | 11,70 | 6,70 |
| gef.: | 55,0 | 10,6 | 11,7 | 6,94 |

Das $^1H$-NMR-Spektrum (250 MHz) dieses Thioharnstoffes wird in Abbildung 2 wiedergegeben.

Beispiel 8:

[N-3-(Dimethylamino)propyl-N'-3-(dimethylamino)propyl-N'-3-(triethoxysilyl)propyl]thioharnstoff

Herstellung aus 41,9 g N,N-Dimethyltrimethylendiamin (0,41 Mol) und 158,1 g [N-3-(Dimethylammonio) propyl-N-3-(triethoxysilyl)propyl] dithiocarbamat aus Beispiel 6
Ausbeute: 175,5 g entspr. 95,0 % d. Th.;
orangefarbene, viskose Flüssigkeit;

$C_{20}H_{46}N_4O_3SSi$ (450,763)

| | C [%] | H [%] | N [%] | S [%] |
|---|---|---|---|---|
| ber.: | 53,29 | 10,29 | 12,43 | 7,11 |
| gef.: | 52,8 | 10,8 | 12,9 | 8,0 |

Allgemeine Herstellvorschrift für Bis(silylalkyl) thioharnstoffe 6

Äquimolare Mengen an Diamin-funktionellem Silan 3 und Ammoniumdithiocarbamat 1 werden gemischt und für 1 h bei einer Temperatur von 120 °C und einem Unterdruck von ca. 100 mbar gerührt. Das ab einer Temperatur von ca. 70 °C gebildete Gemisch aus Triethylamin und Schwefelwasserstoff wird in einer Kühlfalle kondensiert, das Kondensat kann nach üblichen Methoden auf das zur Herstellung von 1 benötigte Triethylamin aufgearbeitet werden. Zur Beseitigung letzter Reste an flüchtigen Bestandteilen wird der Unterdruck schließlich für ca. 10 min. auf 1 mbar erniedrigt.

Beispiel 9:

[N-3-(Triethoxysilyl)propyl-N'-2-(dimethylamino) ethyl-N'-3-(triethoxysilyl)propyl] thioharnstoff:

Herstellung aus 131,6 g [N,N-Dimethyl-N'-3-(triethoxysilyl)propyl] ethylendiamin (0,45 Mol) und 179,4 g 1 (0,45 Mol);
Ausbeute: 246,5 g entspr. 98,5 % d. Th.:
rotbraune, viskose Flüssigkeit

$C_{23}H_{53}N_3O_6SSi_2$ (555,928)

| | C [%] | H [%] | N [%] | S [%] |
|---|---|---|---|---|
| ber.: | 49,69 | 9,61 | 7,56 | 5,77 |
| gef.: | 49,1 | 10,2 | 7,7 | 6,1 |

Das $^1$H-NMR-Spektrum (250 MHz) dieses Thioharnstoffes wird in Abbildung 3 wiedergegeben.

Beispiel 10:

[N-3-(Triethoxysilyl)propyl-N'-2-(diethylamino)ethyl-N'-3-(triethoxysilyl)propyl] thioharnstoff

Herstellung aus 115,4 g [N,N-Diethyl-N'-3-(triethoxysilyl)propyl ] ethylendiamin (0,36 Mol) und 144,1 g 1 (0,36 Mol);
Ausbeute: 209,0 g entspr. 99,4 % d. Th.;
gelbbraune, viskose Flüssigkeiten

$C_{25}H_{57}N_3O_6SSi_2$ (583,982)

| | C [%] | H [%] | N [%] | S [%] |
|---|---|---|---|---|
| ber.: | 51,42 | 9,84 | 7,20 | 5,49 |
| gef.: | 50,3 | 10,4 | 7,1 | 6,4 |

Allgemeine Herstellvorschrift für Bis(silylalkyl) thioharnstoffe 8

Zur Herstellung der benötigten Natriumdithiocarbamatzwischenstufe 7 wird in eine durch Eintrag von elementarem Natrium in Ethanol (500 ml pro Mol Na) erhaltene Natriumethylatlösung eine Mischung aus Bis(3-triethoxysilylpropyl)amin (1 Mol pro Mol Na), Kohlenstoffdisulfid (1,1 Mol pro Mol Na) und Ethanol (300 ml pro Mol Na) unter externer Kühlung so langsam zugegeben, daß die Temperatur des Reaktionsgemisches einen Wert von 30 °C nicht überschreitet. Nach dem Abziehen des Lösungsmittels erhält man das Natriumdithiocarbamat 7 in Form einer hochviskosen, gelben Flüssigkeit in praktisch quantitativer Ausbeute.

$C_{19}H_{42}NNaO_6S_2Si_2$ (523,836)

| | C [%] | H [%] | N [%] | S [%] |
|---|---|---|---|---|
| ber.: | 43,57 | 8,08 | 2,67 | 12,24 |
| gef.: | 43,4 | 8,3 | 2,4 | 12,5 |

Äquimolare Mengen an Natriumdithiocarbamat 7 und N,N-Dialkylalkylendiamin werden gemischt und für 2 h bei einer Temperatur von 140 °C gerührt (u. U. unter Refluxieren des Diamins, das dann auch im Überschuß eingesetzt werden kann). Nach dem Abkühlen wird mit Aceton versetzt (1,5 l pro Mol 7) und vom ausgefallenen Natriumhydrogensulfid abfiltriert. Flüchtige Bestandteile (Lösungsmittel, u. U. Diaminüberschuß) werden anschließend im Vakuum entfernt.

Beispiel 11

{N,N-Bis[3-(triethoxysilyl)propyl]-N'-3-(dimethylamino)propyl}thioharnstoff

Herstellung aus 262 g 7 (0,5 Mol) und 51,1 g N,N-Dimethyltrimethylendiamin;
Ausbeute: 269,5 g entspr. 94,6 % d. Th.
gelbe, viskose Flüssigkeit

$C_{24}H_{55}N_3O_6SSi_2$ (569,995):

| | C [%] | H [%] | N [%] | S [%] |
|---|---|---|---|---|
| ber.: | 50,58 | 9,73 | 7,37 | 5,63 |
| gef.: | 49,1 | 9,1 | 7,5 | 7,0 |

## Patentansprüche

1. N,N'-disubstituierte oder N,N,N'-/N,N',N'-trisubstituierte Thioharnstoffe mit zusätzlicher Organyloxysilyl- und tertiärer Aminfunktion der allgemeinen Formel

$$(RO)_{3-b}\overset{(CH_3)_b}{\overset{|}{Si}} - (X)_a - NR^1 - CS - NR^2 - (CH_2)_n - NR^3_2 \quad (I)$$

in der bedeuten
b: 0; 1 oder 2,
R: Alkyl mit 1 bis 6 C-Atomen, Cycloalkyl mit 5 bis 7 C-Atomen, Aryl, Aralkyl,
X: $-CH_2-$, wenn a = 1, 3, 4, 5 oder 6,
oder X:

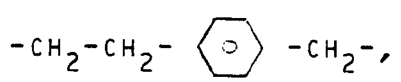

wenn a = 1,
$R^1$, $R^2$: Wasserstoff,

oder
$R^1$: Wasserstoff und
$R^2$:

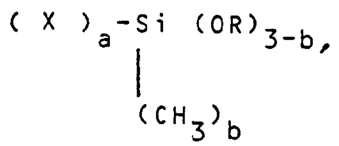

oder
$R^1$:

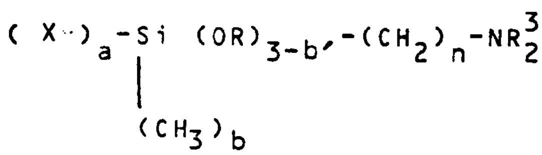

und
$R^2$: Wasserstoff,
$R^3$: Alkyl mit 1 bis 3 C-Atomen
n: 1 bis 6

2. Verfahren zur Herstellung von mehrfach substituierten organyloxysilylfunktionellen Thioharnstoffen gemäß Anspruch 1, dadurch gekennzeichnet, daß man
a) Aminoorganylsilane der allgemeinen Formel

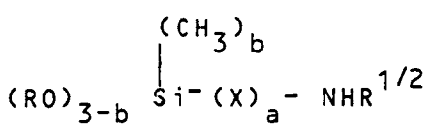 (II)

in denen a, b, X, R, $R^1$, und $R^2$ die obengenannten Bedeutungen haben, in einem organischen inerten Lösungsmittel mit Kohlenstoffdisulfid gegebenenfalls unter Kühlung umsetzt, wobei die Umsetzung bei Verwendung von Verbindungen gemäß Formel (II) in Gegenwart eines tertiären Amins (A) oder Alkalialkoholats (MOR) erfolgt,
b) die dabei gebildeten Dithiocarbamate der allgemeinen Formel

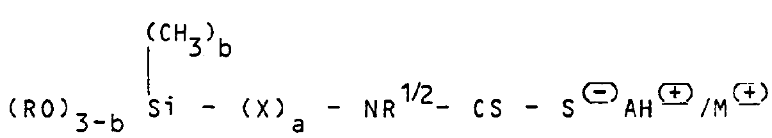 (III)

isoliert und mit mindestens der äquimolaren Menge einer Aminoverbindung der allgemeinen Formel

$$H_2N - (CH_2)_n - NR^3_2 \qquad (IV)$$

versetzt, in denen R, $R^1$, $R^2$, $R^3$, a, b, X und n die obengenannten Bedeutungen besitzen, dieses Gemisch erhitzt, bis die Reaktion abgeschlossen ist, und das entstandene Produkt gemäß Anspruch 1 anschließend nach an sich bekannten Methoden isoliert.

## Claims

1. N,N'-disubstituted or N,N,N'-/N,N',N'-trisubsti-tuted thioureas having an additional organyloxysilyl and tertiary amine function, corresponding to the general formula

$$(RO)_{3-b}\overset{(CH_3)_b}{\overset{|}{Si}} - (X)_a - NR^1 - CS - NR^2 - (CH_2)_n\text{-}NR^3_2 \quad (I)$$

wherein
b: 0, 1 or 2,
R: alkyl having 1 to 6 carbon atoms, cycloalkyl having 5 to 7 carbon atoms, aryl, or aralkyl,
X: $CH_2$ when a = 1, 3, 4, 5 or 6 or
X:

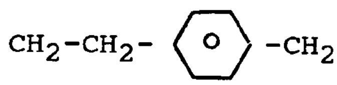

when a = 1,
$R^1$, $R^2$: hydrogen or
$R^1$: hydrogen and
$R^2$:

$$(\ X\ )_a\text{-}\underset{(CH_3)_b}{\underset{|}{Si}}\quad (OR)_{3-b}$$

or
$R^1$:

$$(\ X\ )_a\text{-}\underset{(CH_3)_b}{\underset{|}{Si}}\quad (OR)_{3-b},\text{-}(CH_2)_n\text{-}NR^3_2$$

and
$R^2$: hydrogen,
$R^3$: alkyl having 1 to 3 carbon atoms and
n: 1 to 6.

**2.** A process for the preparation of multisubstituted organyloxy silyl functional thioureas according to Claim 1, characterised in that

a) Aminoorganylsilanes corresponding to the general formula

$$(RO)_{3-b}\overset{(CH_3)_b}{\overset{|}{Si}}\text{-}(X)_a\text{-}\ NHR^{1/2} \qquad (II)$$

in which a, b, X, R, $R^1$ and $R^2$ have the meanings indicated above are reacted with carbon disulphide in an organic inert solvent, optionally with cooling, the reaction with compounds corresponding to formula (II) being carried out in the presence of a tertiary amine (A) or an alkali metal alcoholate (MOR),

b) the resulting dithiocarbamates corresponding to the general formula

$$(RO)_{3-b}\overset{(CH_3)_b}{\overset{|}{Si}} - (X)_a - NR^{1/2}\text{-}\ CS - S^{(-)}\ AH^{(+)}\ /M^{(+)} \qquad (III)$$

are isolated and at least the equimolar quantity of an amino compound corresponding to the general formula

$$H_2N - (CH_2)_n - NR^3_2 \quad (IV)$$

is added thereto, in which formula, R, $R^1$, $R^2$, $R^3$, a, b, X and n have the meanings indicated above, this mixture is heated until the reaction is completed and the resulting product claimed in Claim 1 is subsequently isolated by known methods.

## Revendications

1. Thiourées N,N'-disubstituées ou N,N,N'-/N,N',N'-trisubstituées avec des fonctions organoxysilyl- et aminotertiaires supplémentaires de formule générale :

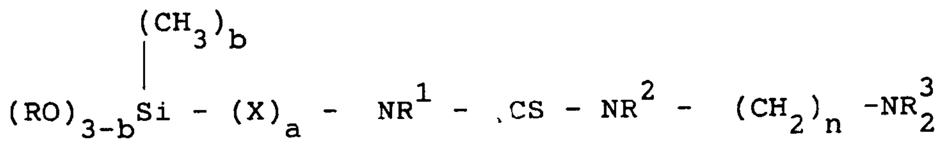 (I)

dans laquelle
b : 0, 1 ou 2,
R : un alcoyle avec 1 à 6 atomes de Carbone, un cycloalcoyle avec 5 à 7 atomes de Carbone, un aryle, un aralcoyle
X : $-CH_2-$ lorsque a, = 1, 3, 4, 5 ou 6,
ou X :

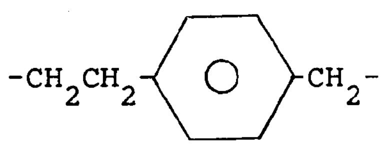

lorsque a = 1,
$R^1$ $R^2$ : signifient de l'hydrogène
ou
$R^1$ : signifie de l'hydrogène et
$R^2$ :

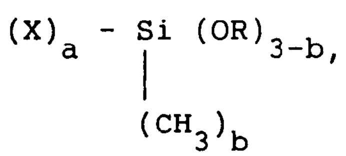

ou
$R^1$ :

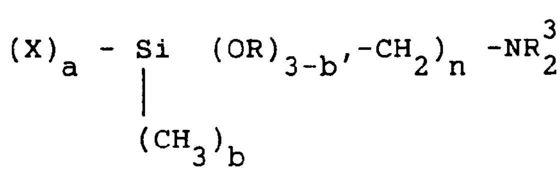

et
$R^2$ : hydrogène,
$R^3$ : alcoyle ayant de 1 à 3 atomes de Carbone,

n : 1 à 6

2. Procédé d'obtention de thiourées rendues fonctionnelles par un groupe organosylyle conformément à la revendication 1, caractérisé en ce que :
a) on fait réagir des aminoorganylsilanes de formule générale :

$$(RO)_{3-b}\overset{\overset{\displaystyle (CH_3)_b}{|}}{Si} - (X)_a - NHR^{1/2} \qquad (II)$$

dans laquelle a, b, X, R, $R^1$ et $R^2$ ont les définitions fournies ci-dessus,
avec le bisulfure de Carbone dans un solvant inerte organique éventuellement tout en refroidissant, procédé dans lequel la réaction s'effectue en utilisant des composés selon la formule II en présence d'une amine tertiaire (A) ou d'un alcoolate de métal alcalin (MOR),
b) on isole le dithiocarbamate ainsi formé de formule générale :

$$(RO)_{3-b}\overset{\overset{\displaystyle (CH_3)_b}{|}}{Si}-(X)_a-NR^{1/2}- CS-S\ -^{(-)}AH^{(+)}/M^{(+)} \qquad (III)$$

et on additionne d'au moins la quantité équimolaire d'un composé aminé de formule générale :

$$H_2N - (CH_2)_n - NR_2 \qquad (IV)$$

dans laquelle R, $R^1$, $R^2$, $R^3$, a, b, X et n possèdent les significations fournies ci-dessus,
on chauffe ce mélange jusqu'à ce que la réaction soit achevée et on isole ensuite le produit qui s'est formé selon la revendication 1 selon les méthodes connues en soi.

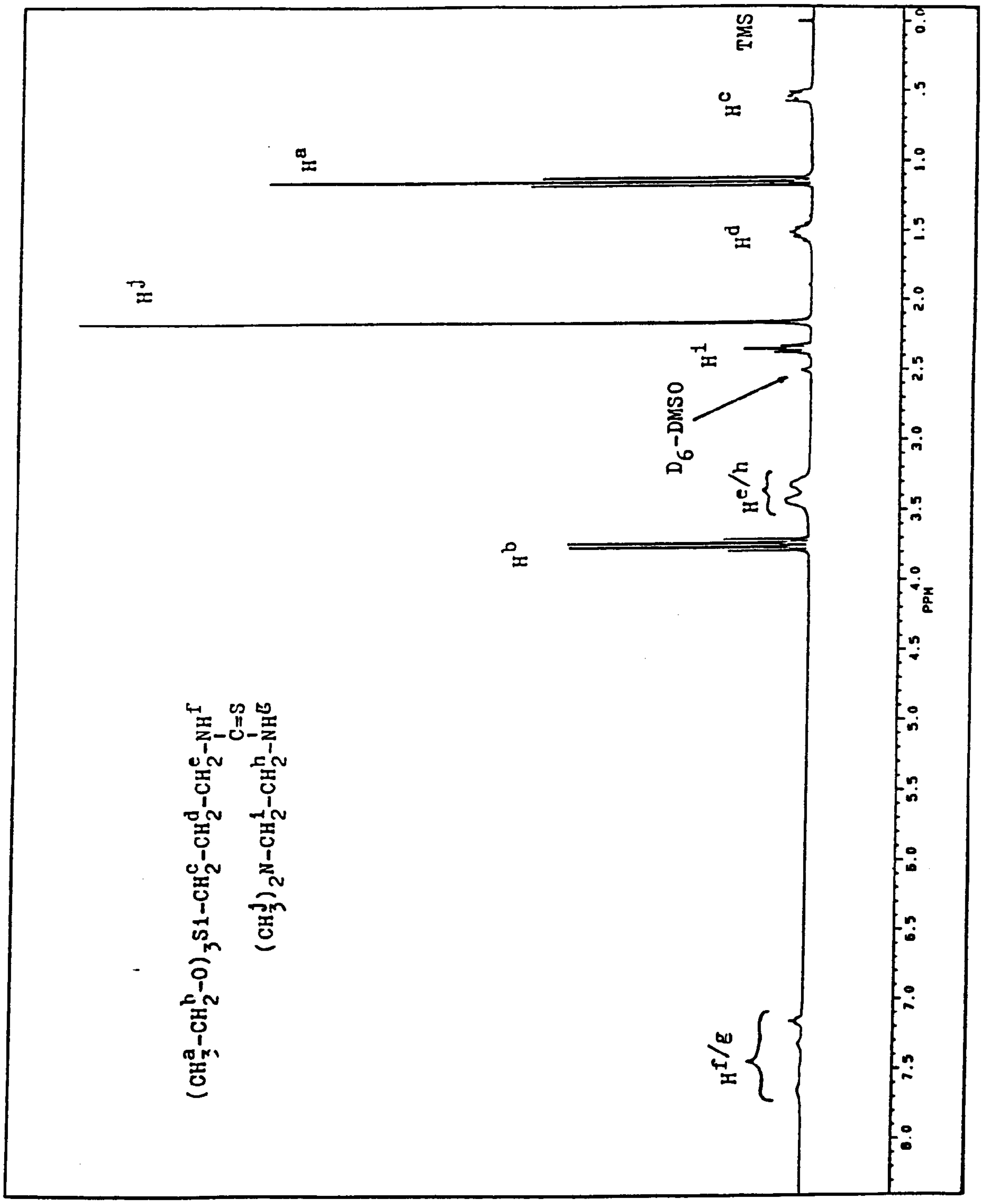
TMS
H^c
H^a
H^d
H^j
H^i
D6-DMSO
H^e/h
H^b
(CH3^a-CH2^b-O)3Si-CH2^c-CH2^d-CH2^e-NH^f
C=S
(CH3^j)2N-CH2^i-CH2^h-NH^g
H^f/g
PPM

Abbildung 1

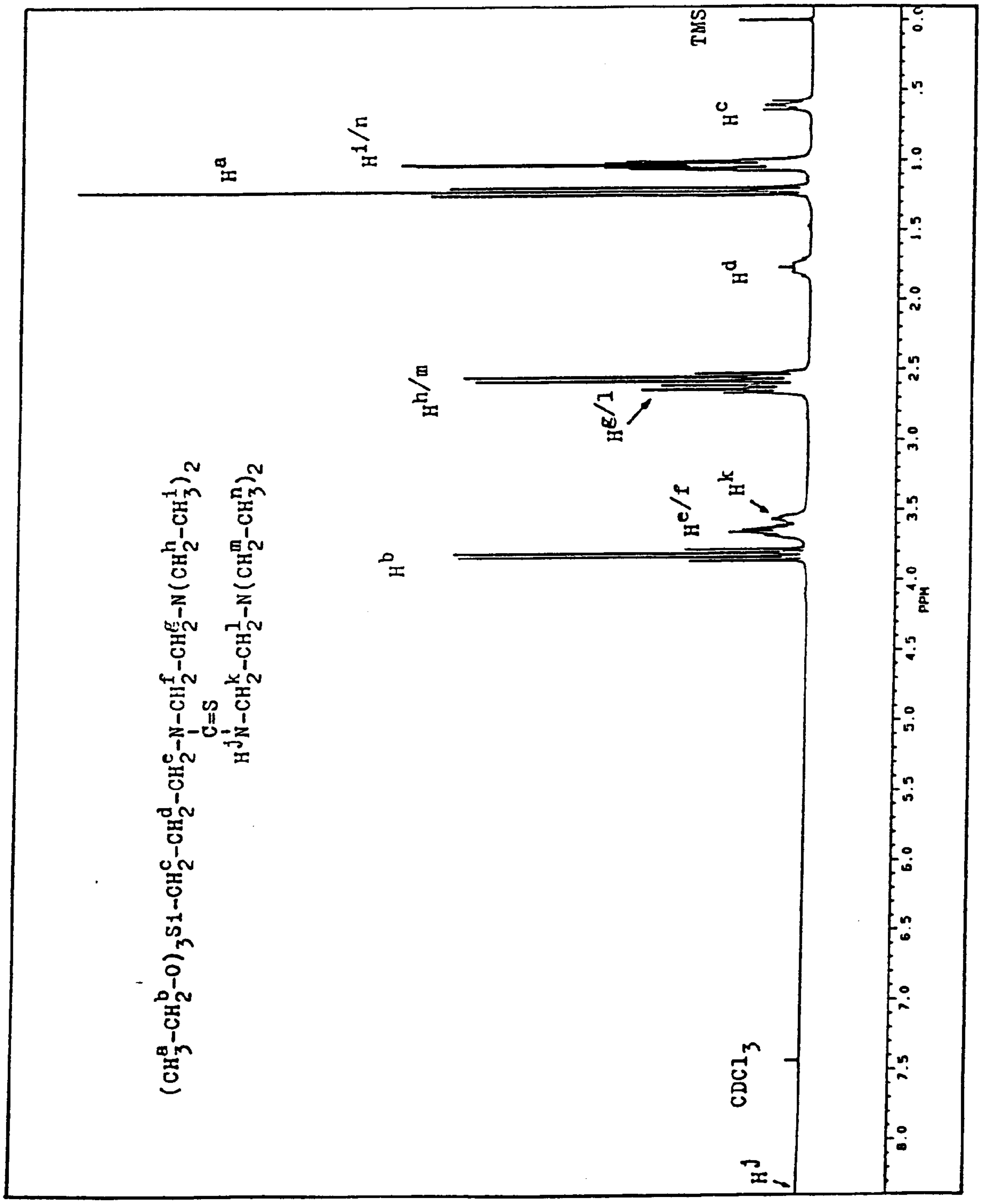


Abbildung 2

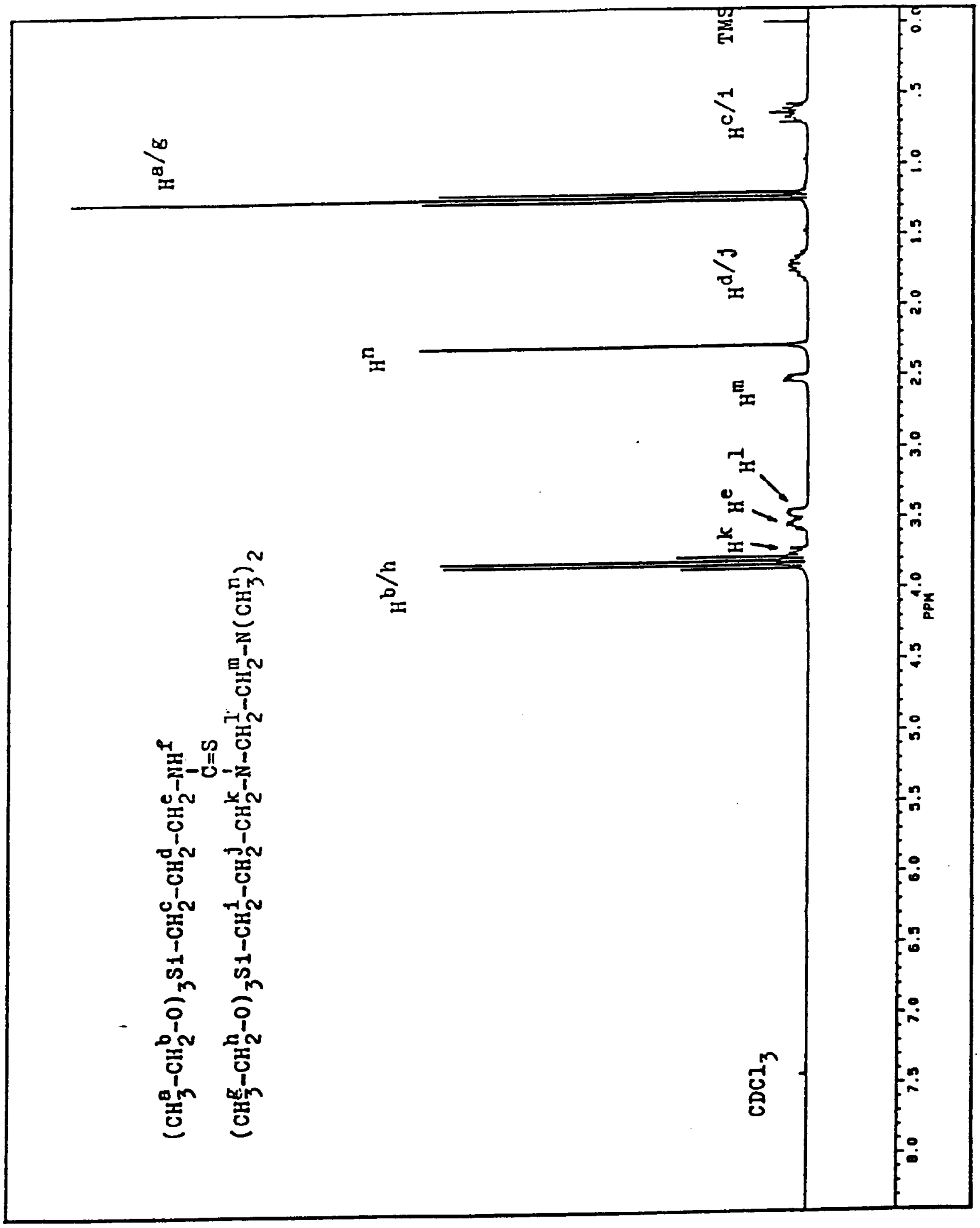


Abbildung 3